# EUROPÄISCHE PATENTSCHRIFT

(11) **EP 4 087 782 B1**
(45) Veröffentlichungstag und Bekanntmachung des Hinweises auf die Patenterteilung: **28.02.2024**
(21) Anmeldenummer: 21702427.2
(22) Anmeldetag: 26.01.2021
(51) Int. Cl.: B64C 29/00, B64C 27/06, B64D 27/24, B60L 50/50

(54) **HYBRIDANTRIEBSSYSTEM EINES HELIKOPTERS**
HYBRID DRIVE SYSTEM OF A HELICOPTER
SYSTÈME D'ENTRAÎNEMENT HYBRIDE D'UN HÉLICOPTÈRE

(30) Priorität: 29.01.2020 CH 1032020
(43) Veröffentlichungstag der Anmeldung: 16.11.2022
(73) Patentinhaber: kopter group ag, 8753 Mollis (CH)
(72) Erfinder: HETTENKOFER, Johann, Werner, 85521 Ottobrunn (DE); EVEN, Detlev, Matthias, Kailua, 96734 (US); DUMMEL, Andreas, Wilfried, 85662 Hohenbrunn (DE)
(74) Vertreter: Keller Schneider Patent- und Markenanwälte AG
(86) Internationale Anmeldenummer: PCT/EP2021/051720
(87) Internationale Veröffentlichungsnummer: WO 2021/151873

(56) Entgegenhaltungen:
- EP-A1- 3 162 713
- WO-A1-2019/211549
- WO-A2-2014/182616
- CN-A- 108 082 499
- DE-A1-102010 021 026
- US-A1- 2018 354 635

## Beschreibung

### Technisches Gebiet

Die Erfindung betrifft ein Hybridantriebssystem mit Steuerungen und einer Antriebswelle eines Helikopters mit einem mit einem Getriebe verbundenen Hauptrotor, welches eine von einem Piloten vorgegebene Fluglage stabil halten kann, umfassend eine Pilotensteuerung, einen Verbrennungsmotor (VM) und einen Elektromotor (EM), die beide direkt an der Antriebswelle (3) angreifen. Der VM ist mit einer VM-Steuerung verbunden, welche die Treibstoffzufuhr aus einem Treibstofftank zum VM regeln kann, um eine gewünschte Antriebskraft an der Antriebswelle bereitzustellen, und der EM mit einer EM-Steuerung, welche mittels Entladung einer Batterie den EM betrieben oder die Batterie durch eine aufgebrachte mechanische Leistung am EM laden kann, wodurch die Antriebswelle jeweils entweder angetrieben oder gebremst wird. Die Erfindung betrifft zudem ein Verfahren zum Betreiben eines solchen Hybridantriebssystems.

### Stand der Technik

Wie in der Fahrzeugindustrie ist auch bei Helikoptern der Antrieb mit zusätzlichem Elektromotor, insbesondere mit Hybridantrieb, bekannt.

Ein ähnliches System wie oben beschrieben ist aus der US 2017/0225573 A1 bekannt. Es umfasst einen Verbrennungsmotor und einen Elektromotor, der zwischen dem Verbrennungsmotor und dem Getriebe des Hauptrotors angeordnet ist. Dasselbe ist bei der US 2018/0354635 A1 der Fall. Diese beschreibt auch ein Verfahren, welches mit verschiedenen Computersystemen die Aufteilung zwischen dem Verbrennungsmotor und dem Elektromotor regelt.

Aus der EP 3162713 ist ein weiteres Hybridsystem bekannt, welches einen Helikopter mittels eines Elektro- und eines Verbrennungsmotors betreibt. Ziel der dort beschriebenen Regelung ist es, Leistungsspitzen durch den Elektromotor abzufangen, sodass der Verbrennungsmotor möglichst im «steady state» Modus betrieben wird, auch bekannt als «moving average power». Um dies zu erreichen, wird das verwendete Steuersignal geteilt in ein hochfrequentes und ein niederfrequentes Teilsignal, wobei das schnellere, hochfrequente Signal an den Elektromotor und das langsamere, niederfrequente Signal an den Verbrennungsmotor geschickt werden. Schnelle Änderungen werden somit vom Elektromotor übernommen, während der Verbrennungsmotor nur gemächlich, sozusagen «gedämpft» Leistungsänderungen übernehmen muss. Der Nachteil an dieser Aufteilung ist die Sicherheit im Fall eines Ausfalls einer der Motoren. Da keiner der Motoren das gesamte Signal empfängt, kann der verbleibende Motor nicht per se die Fluganforderungen übernehmen. Ein zusätzliches Überwachungssystem muss den Motorenausfall erkennen und sogleich dafür sorgen, dass der verbleibende Motor das gesamte Signal erhält. Jedes zusätzlich erforderliche Steuer- oder Überwachungssystem birgt wieder ein Risiko für die Flugsicherheit.

### Darstellung der Erfindung

Es ist die Aufgabe der vorliegenden Erfindung, ein Hybridantriebssystem zu beschreiben, mit der ein möglichst sicherer Betrieb des Helikopters gewährleistet werden kann. Es ist eine weitere Aufgabe der Erfindung, ein Verfahren anzugeben, gemäss dem der sichere Betrieb durchgeführt werden kann. Dieser sichere Betrieb soll zudem bei minimalem Treibstoffverbrauch stattfinden.

Die Aufgaben werden gelöst durch die Merkmale der ersten Patentansprüche der jeweiligen Kategorien. Weitere vorteilhafte Ausführungen sind in den Unteransprüchen beschrieben.

Erfindungsgemäss sind bei einem eingangs erwähnten Hybridantriebssystem an der Antriebswelle je mindestens ein Drehmomentsensor und ein Drehzahlmesser angeordnet, wobei sowohl die VM-Steuerung als auch die EM-Steuerung im Betrieb je Werte der aktuellen Drehzahl DZ und des aktuellen Drehmoments DM erhalten können.

Zudem sind vorgegebene Werte der Drehzahl DZo und des Drehmoments DMo gespeichert, bei denen der VM seinen optimalen Wirkungsgrad erzielt. Diese Werte sind von der EM-Steuerung abrufbar, wobei der erstere dieser Werte, DZo, auch für die VM-Steuerung abrufbar ist.

Die VM-Steuerung ist durch Anpassung der Leistung des VMs jederzeit autark in der Lage, die vorgegebene Drehzahl DZo an der Antriebswelle zu erreichen und konstant zu halten, wodurch jede von der Pilotensteuerung vorgegebene Fluglage stabil gehalten wird. Zudem kann die EM-Steuerung durch Einsatz des EMs die Antriebswelle zusätzlich antreiben oder bremsen, wodurch sich die Drehzahl DZ ändert und die VM-Steuerung automatisch die Leistung am VM anpasst, um die vorgegebene Drehzahl DZo an der Antriebswelle wieder zu erreichen und zu halten.

In der EM-Steuerung ist eine erste Direktive gespeichert, stets eine derartige Antriebs- oder Bremskraft vom EM auf die Antriebswelle auszuüben, welche dazu führt, dass der VM, wenn er die optimale Drehzahl DZo an der Antriebswelle erreicht hat resp. hält, automatisch das Drehmoment DMo an der Antriebswelle erzeugt, bei welchem er die optimale Motorenleistung erreicht.

Vorzugsweise ist der EM zwischen dem VM und dem Getriebe des Hauptrotors 1 angeordnet. Die Drehzahl DZ kann an einer beliebigen Stelle an der Antriebswelle gemessen werden, sie ist überall gleich. Mindestens einer der Drehmomentsensoren sollte zwischen dem VM und dem EM angeordnet sein, um die Last des VMs an der Antriebswelle zu ermitteln. Weitere Drehmomentsensoren können zwischen dem EM und dem Getriebe angeordnet sein, um die gesamte Last an der Antriebswelle zu ermitteln. Massgebend für die Regelung der EM-Steuerung ist aber in erster Linie der Drehmomentsensor zwischen VM und EM, da dieser die Leistung am VM angibt, welcher, gemäss der ersten Direktive, mit höchstem Wirkungsgrad betrieben werden soll.

Eine direkte Daten-Signalleitung kann zwischen der Pilotensteuerung und der VM-Steuerung eingerichtet sein, die zum Starten und Landen des Helikopters gebraucht wird. In diesen Phasen muss die erste Direktive nicht angewendet werden. Die indirekte Verbindung existiert stets über die Fluglage des Helikopters: Wenn der Pilot die Neigung der Rotorblätter steiler einstellt, um an Höhe zu gewinnen, sinkt durch die höhere Last unmittelbar die Drehzahl DZ an der Antriebswelle, wonach sich die Leistungsanforderung im Normalbetrieb nach der ersten Direktive ausrichtet.

Zusätzlich können ein Füllstandsmesser am Treibstofftank und ein Ladezustandsmesser an der Batterie angeordnet sein, welche ihre Messdaten im Betrieb der EM-Steuerung übermitteln können. Durch eine Berechnungseinheit können die jeweils noch verfügbaren Energien berechnet werden. Im Bedarfsfall kann die EM-Steuerung nach einer von der ersten Direktive abweichenden zweiten Direktive verfahren. Diese kann zum Zweck haben, die Batterie vor Über- und Unterladung zu schützen, Treibstoff zu sparen und/oder zeitweise den VM mit niedrigerer Leistung zu betreiben, um Emissionen zu reduzieren.

Wichtig ist, dass die VM-Steuerung mit dem VM jederzeit autark in der Lage ist, die erforderliche Drehzahl DZ an der Antriebswelle zu erreichen, um eine von der Pilotensteuerung vorgegebene Fluglage zu erreichen resp. stabil zu halten. Dies bedeutet, dass ein Helikopter mit seinem VM derart mit einem EM und einer EM-Steuerung aufgerüstet werden kann, ohne dass in das bestehende System der VM-Steuerung eingegriffen werden muss. Dies hat zur Folge, dass im Fall eines Systemfehlers, wenn der EM und/oder die EM-Steuerung ausfallen, der Helikopter normal nur mit dem VM geflogen werden kann.

Das erfindungsgemässe Verfahren zum Betreiben eines Hybridantriebssystems für eine Antriebswelle eines Helikopters gewährleistet eine vom Piloten geforderte Fluglage unter Verwendung eines erfindungsgemässen Hybridantriebssystems mit Steuerungen. Es führt die folgenden Schritte aus:
Die aktuellen Werte für Drehzahl DZ und Drehmomentwert DM werden an der Antriebswelle kontinuierlich gemessen und sowohl der EM-Steuerung als auch der VM-Steuerung übertragen. Vorgegebene Werte für Drehzahl DZ₀ und Drehmoment DM₀ sind abgespeichert, wobei beide Werte DZo, DMo von der EM-Steuerung und mindestens die Drehzahl DZo von der VM-Steuerung abrufbar sind. Beide Steuerungen ermitteln stets Abweichungen der gemessenen Werte DZ, DM von den vorgegebenen Werten DZ₀, DMo, die ihnen bekannt sind.

Sobald ein Pilot mittels der Pilotensteuerung eine veränderte Leistungsanforderung an der Antriebswelle erzeugt, um eine gewünschte Fluglage zu erreichen, wird auch eine Änderung der Drehzahl DZ an der Antriebswelle verursacht. Auf Grund einer Abweichung der aktuellen Drehzahl DZ von der vorgegebenen Drehzahl DZo ändert die VM-Steuerung die Leistung am VM auf träge Weise derart, dass die vorgegebene Drehzahl DZo wieder erreicht wird.

Im folgenden Beispiel wird dies genauer erklärt: Die VM-Steuerung ist so eingestellt, dass vom VM stets die Last aufgebracht wird, um die optimale Drehzahl DZo zu erreichen und konstant zu halten. Stellt der Pilot die Rotorblätter an, um an Höhe zu gewinnen, so sinkt als Folge davon die Drehzahl DZ. Der VM reagiert auf dieses Absinken der Drehzahl DZ mit einer erhöhten Leistung, das von ihm aufgebrachte Drehmoment DM steigt. Dies wiederum hat zur Folge, dass die Drehzahl DZ ansteigt. Sobald diese wieder den vorgegebenen Wert DZo erreicht hat und konstant bleibt, hat die VM-Steuerung keine weitere Veranlassung, die Motorenleistung zu ändern. Der VM arbeitet unverändert weiter, nun aber mit einem höheren Drehmoment DM als vor dem Anstellen der Rotorblätter. Beim Absinken des Helikopters passiert das entsprechend Entgegengesetzte, das vom VM aufgebrachte Drehmoment DM sinkt.

Im erfindungsgemässen Verfahren mit dem Hybridantriebssystem setzt aber die EM-Steuerung gemäss ihrer ersten Direktive ein. Auf Grund einer Abweichung der aktuellen Werte für Drehzahl DZ und/oder Drehmoment DM von den entsprechenden vorgegebenen Werten DZo, DMo ändert sie die Leistung am EM auf schnellere Weise als der VM derart, dass der VM, wenn er seine Leistung verzögert auf die vorgegebene Drehzahl DZ₀ geregelt hat, das vorgegebene Drehmoment DMo aufbringt, in dem er den optimalen Wirkungsgrad erreicht. Dies erreicht die EM-Steuerung, indem sie entweder die Batterie durch die mechanische Leistung am EM lädt oder den EM mittels der Ladung in der Batterie betreibt.

Im oben genannten Beispiel setzt nun also die EM-Steuerung ein. Die vorgegebenen Werte für Drehzahl DZo und Drehmoment DMo sind ihr bekannt, die jeweiligen Unterschiede zu den aktuellen Werten DZ, DM kann sie auf Grund der ihr zugetragenen Messwerte ermitteln.

Die EM-Steuerung arbeitet zunächst in ihrer ersten Direktive. Stellt der Pilot demnach die Rotorblätter an, um Höhe zu gewinnen, sinkt die Drehzahl zunächst ab, wie oben beschrieben. Bevor aber der VM seine Leistung durch Erhöhung des Drehmoments steigert, bringt der erheblich schneller reagierende EM die zusätzliche Lastanforderung auf, sodass die erforderliche Drehzahl DZo sofort wieder erreicht ist. Die VM-Steuerung, welche die Drehzahl auch stets überwacht, nimmt höchstens eine kurzzeitige, geringe Abweichung der vorgegebenen Drehzahl DZo wahr, welche aber sogleich vom EM kompensiert wurde, weil dieser die dafür nötige Last sofort aufgebracht hat. Durch die langsamere Ansprechzeit des VMs steigert dieser seine Leistung nicht, er hält sein ursprünglich aufgebrachtes Drehmoment DM unverändert aufrecht.

Dasselbe geschieht auch bei einem Sinkflug, wenn der Pilot die Neigung der Rotorblätter abflacht. Die Batterie des EM wird geladen, indem der EM die Antriebswelle bremst, bevor der VM das Ansteigen der Drehzahl ausgleicht und seine aufgebrachte Leistung senken kann.

Diese erste Direktive der EM-Steuerung regelt daher einerseits die Drehzahl DZ₀ an der Antriebswelle und hält diese konstant, indem sie den EM entsprechend ansteuert. Dadurch verhindert sie eine Veränderung der Last des VMs, sein Drehmoment bleibt konstant. Dies ist erstrebenswert, solange dieses Drehmoment dem vorgegebenen Drehmoment DM₀ entspricht. Solange dies der Fall ist, ist der Wirkungsgrad stets optimal.

Zudem wird von der EM-Steuerung andererseits auch stets überprüft, ob das aktuell an der Antriebswelle vom VM erzeugte Drehmoment DM dem vorgegebenen Drehmoment DMo entspricht. Abweichungen können beispielsweise nach dem Start auftreten, beim Steig- oder Sinkflug oder nachdem der EM ausgesetzt war, etwa weil der Ladezustand der Batterie zu niedrig war. Beim Feststellen einer Abweichung des Drehmoments regelt die erste Direktive der EM-Steuerung daher auch dieses gemessene Drehmoment DM zum vorgegebenen Wert DMo, und zwar auf folgende Weise: Ist das gemessene Drehmoment zu hoch, so regelt die EM-Steuerung die DZ auf einen stets leicht erhöhten Wert. Die VM-Steuerung reagiert darauf mit einer Leistungssenkung, wodurch das vom VM aufgebrachte Drehmoment stetig sinkt. Die EM-Steuerung hält die leicht erhöhte Drehzahl so lange aufrecht, bis das gemessene Drehmoment DM dem vorgegebenen Drehmoment DM₀ entspricht. Sobald dies erreicht ist, wird die Leistung am EM schnell wieder gesenkt, bis die vorgegebene Drehzahl DZo wieder erreicht ist. Als Folge davon wird auch das vorgegebene Drehmoment DMo erhalten. Der VM arbeitet nun in seinem optimalen Wirkungsgrad, die EM-Steuerung hält die DZ wieder konstant, damit der VM unverändert seine optimale Leistung erbringt.

Die EM-Steuerung steigert demnach im Betrieb auf Grund einer zu geringen Drehzahl, wenn DZ < DZo, und/oder auf Grund eines überhöhten Drehmoments, wenn DM > DMo, die Leistung am EM, und umgekehrt.

Erfindungsgemäss gewährleistet die VM-Steuerung bei einem Aussetzen der EM-Steuerung auf Grund der Drehzahlregelung auf den vorgegebenen Wert DZo automatisch eine stabile Fluglage, da die erforderliche Antriebskraft mittels VM bereitstellt wird. Dazu sind keine Anpassung und keine weitere Überwachung notwendig.

In einem bevorzugten Verfahren kann die EM-Steuerung auf Grund der Messdaten eines Füllstandsmessers des Treibstofftanks und/oder eines Ladezustandsmessers der Batterie die noch verfügbaren Energien ermitteln und infolgedessen zeitweise von der ersten Direktive abweichen und gemäss einer zweiten Direktive verfahren. In dieser zweiten Direktive kann gezielt die Batterie geladen oder entladen werden, um die Batterie zu schützen, um Treibstoff zu sparen oder um zeitweise den VM mit niedrigerer Leistung zu betreiben, um Emissionen zu reduzieren.

Dadurch kann beispielsweise eine Tiefentladung oder eine Überladung der Batterie verhindert werden. Andererseits kann in oberen Höhenlagen gezielt der EM vermehrt zum Einsatz kommen, weil der Treibstoffverbrauch dort verhältnismässig stark ansteigt. Zudem kann in der Start- und/oder Landephase ausschliesslich der EM betrieben wird, zur Reduktion von Lärm- und Abgasemissionen im Landegebiet, oder ausschliesslich der VM, je nach Bedarf.

Während in der EP 3162713 das Signal des Piloten in ein hochfrequentes und ein niederfrequentes Steuersignal des Piloten aufgeteilt wird, um eine gewünschte Leistungsaufteilung zweier Motoren zu erreichen, wird in der vorliegenden Erfindung die Aufteilung der Leistungen im normalen Betrieb mittels erster Direktive der EM-Steuerung geregelt, indem die gemessene Drehzahl DZ und das gemessene Drehmoment DM auf die gespeicherten Sollwerte DZo und DMo geregelt werden. In der normalen Flugphase, abgesehen von Start und Landung, erhalten die Steuerungen beider Motoren keine Steuersignale des Piloten. EM und VM regeln ihre Leistungen, damit die vorgegebene Drehzahl DZo konstant bleibt, wobei der schneller reagierende EM jede Abweichung vorrangig kompensiert, bevor der träge VM darauf reagieren kann. Zudem regelt der EM nach der ersten Direktive durch zusätzliche, positive oder negative Leistungserbringung, das vom VM aufgebrachte Drehmoment DM auf den vorgegebenen Wert DM₀. Das hier beschriebene Hybridantriebssystem ist somit sehr einfach in der Steuerung und prozesssicher, selbst wenn der VM plötzlich ausfällt.

Auf diese Weise wird das Hybridantriebssystem stets mit der Lastaufteilung geflogen, welche den vorhandenen Treibstoff am effizientesten einsetzt. Dies wird aber nicht erreicht, indem komplizierte Rechnungen durchgeführt werden, sondern direkt und einzig über die Kenntnis der jeweils aktuellen Werte für Drehzahl DZ und Drehmoment DM und der Kenntnis deren vorgegebenen Werte DZo, DMo.

Beim Ausfall des EMs wird das erfindungsgemässe Hybridantriebssystem zu einem herkömmlichen VM-Antrieb, denn die VM-Steuerung stellt durch den VM jeweils genau das erforderliche Drehmoment mit einer definierten Verzögerung an der Antriebswelle zur Verfügung, das für die Erreichung resp. für den Erhalt der jeweils vom Piloten vorgegebenen Fluglage erforderlich ist.

Bei Ausfall des VMs sinkt die Drehzahl, was sofort vom EM durch Zusatzleistung kompensiert wird. Durch Konstanthaltung der Drehzahl DZ ist die Flugsicherung gewährleistet. Zudem stellt die EM-Steuerung fest, dass das vom VM aufgebrachte Drehmoment DM weggefallen ist, was nur bedeuten kann, dass der VM ausser Betrieb ist. Der EM übernimmt somit die gesamte Leistungserbringung, bis der VM wieder einsetzt, oder bis zur Landung. Ein sicherer Flug wird stets gewährleistet.

Da beide Steuerungen jeweils dieselben Informationen erhalten, die direkt von der Fluglage her generiert werden, kann jeder der Motoren autonom die erforderliche Fluglage gewährleisten. Die Aufteilung der Lasten auf die beiden Motoren erfolgt vollkommen automatisch, indem der EM sehr schnell seinen Teil der Arbeit erkennt und ausführt, sodass der VM stets im optimalen Bereich arbeiten kann.

Zudem kann, wenn der Treibstoff knapp ist, die EM-Steuerung den EM stärker belasten, um Treibstoff zu sparen. Zum Verhindern einer Tiefentladung oder einer Überladung der Batterie kann ebenfalls von der ersten Direktive abgewichen werden. Auch kann der EM als Booster zugeschalten werden, um eine zusätzliche Leistung zu erbringen, z.B. beim Überfliegen eines hohen Berges. Andererseits kann bei hoher Temperatur und/oder in extremen Höhenlagen, in denen wegen der dünnen Luft die Leistung des VMs stark reduziert ist, der EM verstärkt zum Einsatz kommen, wenn die Batterieladung dies erlaubt, um die verfügbare Leistungsgrenze zu erhöhen oder Treibstoff einzusparen. In der Start- und/oder Landephase kann zudem ausschliesslich der EM betrieben werden, zur Reduktion von Lärm- und Abgasemissionen im Start- resp. Landegebiet.

Sobald eine Ausnahmesituation beendet ist, wird die erste Direktive wieder aktiviert.

### Kurze Beschreibung der Zeichnungen

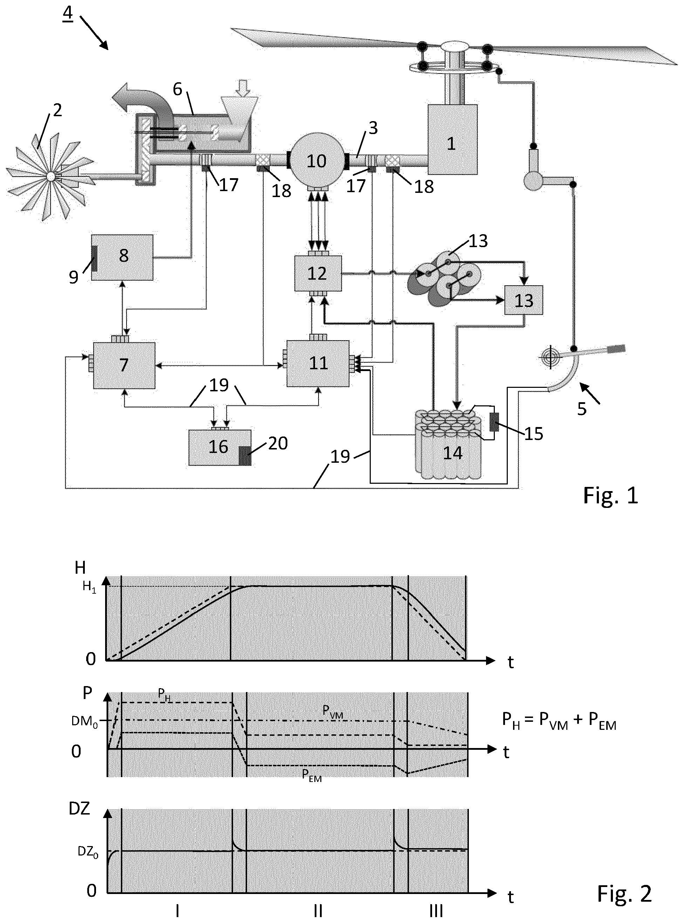

Im Folgenden wird die Erfindung mit Bezug auf die Zeichnungen näher erklärt. Es zeigen:
1 Fig. 1 eine schematische Darstellung eines erfindungsgemässen Hybridantrieb s systems;
2 eine Grafik zur Beschreibung der Lastaufteilung in verschiedenen Fluglagen, wie Steigen, Reiseflug und Sinken.

### Wege zur Ausführung der Erfindung

Die Figur 1 zeigt ein erfindungsgemässes Hybridantriebssystem 4 in einer detaillierteren Version, als dies für die Beschreibung der Erfindung notwendig ist. Sie zeigt einen Teilbereich eines Helikopters mit einem Antriebsstrang 3, ein Getriebe mit Hauptrotor 1 und zudem einen Heckrotor 2, der für den Erfindungsgegenstand nicht von Bedeutung ist. Am Antriebsstrang 3 sind parallel ein Verbrennungsmotor (VM) 6 und ein Elektromotor (EM) 10 angeordnet, wobei der EM 10 vorzugsweise zwischen dem VM 6 und dem Getriebe des Hauptrotors 1 angeordnet ist. Andere Anordnungen sind auch möglich.

Eine Pilotensteuerung 5 sorgt für die Aufnahme der Steuerbefehle eines Piloten zur Anstellung der Hauptrotor-Blätter, wodurch sich die einzustellende Motorleistung indirekt als erforderliche Drehzahl DZo an der Antriebswelle 3 ergibt. Eine für den erfindungsgemässen Flugbetrieb optionale Daten-Signalleitung 19 von der Pilotensteuerung zur VM-Steuerung 7 kann für Start- und Landemanöver gebraucht werden.

Der VM 6 ist mit einem Treibstofftank 8 und dieser mit der VM-Steuerung 7 verbunden, welche die Treibstoffzufuhr aus dem Treibstofftank 8 zum VM 6 regeln kann, um die nötige Antriebskraft an der Antriebswelle 3 bereitzustellen. Zudem ist der EM 10 mit einer Batterie 14 verbunden, vorzugsweise über einen Stromrichter 12 und über eine Ladeeinheit 13, die mit einer Stromspitzenpufferung ausgestattet sein kann. Der EM 10 kann durch die Ladung der Batterie 14 betrieben, oder die Batterie 14 durch die mechanische Leistung am EM 10 geladen werden, wodurch die Antriebswelle 3 jeweils entweder angetrieben oder gebremst wird. Eine EM-Steuerung 11 ist mindestens indirekt, beispielsweise über einen Stromrichter 12 mit dem EM 10 verbunden und kann diesen regeln, um eine erforderliche Antriebs- oder Bremskraft an der Antriebswelle 3 bereitzustellen.

Zudem können ein Füllstandsmesser 9 am Treibstofftank 8 und ein Ladezustandsmesser 15 an der Batterie 14 angeordnet sein, welche ihre Messdaten im Betrieb einer Berechnungseinheit 16 übermitteln können.

An der Antriebswelle 3 sind je mindestens ein Drehmomentsensor 17 und ein Drehzahlmesser 18 angeordnet. Die VM-Steuerung 7 und die EM-Steuerung 11 erhalten im Betrieb Daten von mindestens je einem Drehmomentsensor 17 und von einem Drehzahlmesser 18.

Die Berechnungseinheit 16 ist mit der EM-Steuerung 11 und mit der VM-Steuerung 7 verbunden. Sie dient der Berechnung der noch verfügbaren Energie, des erforderlichen Drehmoments an der Antriebswelle 3 und/oder zum Führen der EM-Steuerung 11. Sie umfasst einen Datenspeicher 20, in dem die Werte einer vorgegebenen Drehzahl DZo und eines vorgegebenen Drehmoments DMo gespeichert sind, wobei bei diesen Werten eine optimale Leistungseinkopplung des VMs 6 erzielt wird, der Wirkungsgrad des VMs ist bei diesen Werten an höchsten.

Im Betrieb ist es die EM-Steuerung 11, welche die Verteilung der Lasten auf den VM 6 und den EM 10 provoziert. In Fig 2 wird dies schematisch dargestellt.

Die gestrichelte Kurve im oberen Diagramm stellt die Fluglage als Funktion der Zeit dar, wie sie jeweils von der Pilotensteuerung 5 gefordert wird, insbesondere die Flughöhe H. Mit der Flughöhe «0» ist hier der Boden zu verstehen. Die durchgezogene Linie stellt die effektive Flughöhe H dar, sie ist leicht verzögert. In der ersten Phase (I) steigt der Helikopter stetig, bis er die gewünschte Flughöhe Hi erreicht hat. In der zweiten Phase (II) fliegt er konstant in dieser Höhe weiter, und in der dritten Phase (III) sinkt er wieder ab. Zwischen allen Flugphasen dauert es jeweils eine Weile, bis das neu vorgegebene Ziel erreicht ist.

Die Kurven im mittleren Diagramm geben schematisch die gesamte Last P_{H}, d.h. das gesamte Drehmoment am Hauptrotor (gestrichelte Linie), die Last P_{VM} am VM 6 (punktgestrichelte Linie) und die Last P_{EM} am EM 10 (gepunktete Linie) an. Das unterste Diagramm gibt die Drehzahl DZ an.

Der VM 6 arbeitet nach dem Startvorgang auf einem gleichbleibend hohen Niveau. In der ersten Phase I arbeitet der EM 10 als zusätzlicher Antrieb mit, sobald der VM 6 die vorgegebene, optimale Last P_{VM} erreicht hat, indem er das Drehmoment DMo aufbringt. Er unterstützt den VM (6) beim Steigflug während der Phase I, bis die vorgegebene Flughöhe Hi erreicht ist, d.h., bis der Pilot den Anstellwinkel der Rotorblätter etwas abflacht. Der Startvorgang kann abweichend von der ersten Direktive verlaufen, bis der Helikopter sicher in der Luft ist.

Durch das Abflachen der Rotorblätter zu Beginn der Phase II steigt kurzzeitig die Drehzahl DZ etwas an, wie aus dem untersten Diagramm ersichtlich ist. Der EM 10 reagiert unmittelbar darauf und senkt seine Leistung, bis die Drehzahl DZ wieder der Vorgabe DZ₀ entspricht. Die Flughöhe bleibt nun konstant während der gesamten Phase II. Der VM 6 ist träge und reagiert daher nicht auf diese kurzzeitige Veränderung. Im dargestellten Beispiel ist die Last am EM 10 in der Phase II negativ, er lädt somit als Generator die zusätzlich verfügbare Energie aus dem Überschuss der Leistung vom VM 6 wieder in die Batterie 14. Der VM 6 ändert auch in der Phase II seine Last nicht.

Bei der Einleitung zum Sinkflug, zu Beginn der Phase III, flacht der Pilot erneut die Rotorblätter etwas ab, die Drehzahl DZ steigt erneut kurzzeitig, der EM 10 reagiert darauf erneut mit der Reduktion seiner Leistung. Diesmal regelt er aber auf eine Drehzahl DZ, die etwas höher ist als die Vorgabe DZo, gemäss seiner zweiten Direktive. Nun wird sofort die Energie am EM 6 noch stärker rekuperiert, weil der EM 10 die Antriebswelle 3 noch weiter bremst. Da die Drehzahl DZ etwas erhöht ist, reagiert nun der VM 6, indem er seine Leistung stetig reduziert. Der EM 10 hält dabei die erhöhte Drehzahl DZ aufrecht, wie aus der untersten Kurve in der Phase III dargestellt ist: Die durchgezogene Linie, welche die aktuelle Drehzahl DZ darstellt, ist höher als die gestrichelte Linie, welche DZo angibt.

Solange die aktuelle Drehzahl DZ grösser ist als die vorgegebene Drehzahl DZo, sinkt die Leistung am VM 6 und damit die Lärm- und Abgasemission am Landeort. Dies wird erreicht, indem der EM 10 stetig seine elektrisch generierte Leistung verringert, er verringert demnach seine Bremswirkung.

Erfindungsgemäss wird die Drehzahl DZ der Antriebswelle 3 nach der ersten Direktive allein vom EM 10 so ausgeregelt, dass sie bei DMo von VM 6 auf der vorgegebenen Drehzahl DZo konstant gehalten wird. Nach der zweiten Direktive, wie in Phase III gezeigt, wird davon abgewichen, um die Last am VM 6 gezielt zu verringern. Abgesehen von der bereits genannten Reduktion der Emissionen können andere Gründe zur Abweichung der ersten Direktive führen. Insbesondere sind es das gezielte Laden resp. Entladen der Batterie 14, wenn ihr Ladezustand dies erfordert. Zudem kann der EM 10 als Booster zugeschaltet werden, um kurzzeitig eine höhere Leistung zu erbringen oder um Treibstoff einzusparen, beispielsweise in höheren Lagen.

Die zweite Direktive kann beispielsweise auf Grund der Kenntnisse der Energievorräte geregelt werden, wenn die EM-Steuerung 11 Angaben zum Ladezustand der Batterie 14 und zum Tankvorrat hat, durch Lärmvorgaben in Abhängigkeit der Überflughöhe, und/oder durch vorherige Angabe der geplanten Flugbahn.

### Bezugszeichenliste

- 1: Getriebe mit Hauptrotor
- 2: Heckrotor
- 3: Antriebswelle
- 4: Hybridantriebssystem
- 5: Pilotensteuerung
- 6: Verbrennungsmotor (VM)
- 7: VM-Steuerung
- 8: Treibstofftank
- 9: Füllstandsmesser
- 10: Elektromotor (EM)
- 11: EM-Steuerung
- 12: Stromrichter
- 13: Ladeeinheit
- 14: Batterie
- 15: Ladezustandsmesser
- 16: Berechnungseinheit
- 17: Drehmomentsensor
- 18: Drehzahlmesser
- 19: Daten-Signalleitung
- 20: Datenspeicher mit Wert der optimalen Drehzahl des VM

- I: erste Phase, Steigflug
- II: zweite Phase, konstante Flughöhe
- III: dritte Phase, Sinkflug

- t: Zeit
- H: aktuelle Flughöhe
- Hi: zu erreichende Flughöhe
- P: Leistung (redundant zum Drehmoment)
- P_{H}: Gesamtleistung
- P_{EM}: Leistung am EM
- P_{VM}: Leistung am VM
- DZ: Drehzahl an der Antriebswelle, gemessen
- DZo: optimale Drehzahl
- DM: Drehmoment an der Antriebswelle, gemessen
- DMo: vorgegebenes Drehmoment

## Patentansprüche

1. Hybridantriebssystem (4) mit Steuerungen (5, 7, 11) und einer Antriebswelle (3) eines Helikopters mit einem mit einem Getriebe verbundenen Hauptrotor (1), welches eine von einem Piloten vorgegebene Fluglage stabil halten kann, umfassend
- eine Pilotensteuerung (5),
- einen Verbrennungsmotor (VM) (6) und einen Elektromotor (EM) (10), die beide direkt an der Antriebswelle (3) angreifen,
- wobei der VM (6) mit einer VM-Steuerung (7) verbunden ist, welche die Treibstoffzufuhr aus einem Treibstofftank (8) zum VM (6) regeln kann, um eine gewünschte Antriebskraft an der Antriebswelle (3) bereitzustellen;
- und wobei der EM (10) mit einer EM-Steuerung (11) verbunden ist, welche mittels Entladung einer Batterie (14) den EM (10) betrieben oder die Batterie (14) durch eine aufgebrachte mechanische Leistung am EM (10) laden kann, wodurch die Antriebswelle (3) jeweils entweder angetrieben oder gebremst würde,
- wobei an der Antriebswelle (3) je ein oder mehrere Drehmomentsensoren (17) und Drehzahlmesser (18) angeordnet sind und sowohl die VM-Steuerung (7) als auch die EM-Steuerung (11) im Betrieb je Werte der aktuellen Drehzahl (DZ) und des aktuellen Drehmoments (DM) erhalten können,
- und wobei vorgegebene Werte der Drehzahl (DZo) und des Drehmoments (DMo), in denen der VM (6) seinen optimalen Wirkungsgrad erzielen kann, gespeichert und für die EM-Steuerung (11) abrufbar sind, wobei ersterer (DZo) auch für die VM-Steuerung (7) abrufbar ist,
- und dass die VM-Steuerung (7) durch Anpassung der Leistung des VMs (6) jederzeit autark in der Lage ist, die vorgegebene Drehzahl (DZo) an der Antriebswelle (3) zu erreichen und konstant zu halten, um jede von der Pilotensteuerung (5) vorgegebene Fluglage stabil zu halten,
- wobei die EM-Steuerung (11) durch Einsatz des EMs (10) die Antriebswelle (3) zusätzlich antreiben oder bremsen kann, wodurch die VM-Steuerung (7) auf Grund der aktuellen Drehzahl (DZ) automatisch die Leistung am VM (6) anpassen kann, um die vorgegebene Drehzahl (DZo) an der Antriebswelle (3) zu erreichen resp. zu halten,
**dadurch gekennzeichnet,**
- **dass** in der EM-Steuerung (11) eine erste Direktive gespeichert ist, stets eine derartige Antriebs- oder Bremskraft vom EM (10) auf die Antriebswelle (3) auszuüben, welche dazu führt, dass der VM (6), wenn er die optimale Drehzahl (DZo) an der Antriebswelle (3) erreicht hat resp. hält, automatisch das Drehmoment (DMo) an der Antriebswelle (3) erzeugt, bei welchem er die optimale Motorenleistung erreicht.

2. Hybridantriebssystem (4) nach Anspruch 1, **dadurch gekennzeichnet, dass** der EM (10) zwischen dem VM (6) und dem Getriebe des Hauptrotors (1) angeordnet ist.

3. Hybridantriebssystem (4) nach Anspruch 1 oder 2, **dadurch gekennzeichnet, dass** eine direkte Daten-Signalleitung (19) zwischen der Pilotensteuerung (5) und der VM-Steuerung (7) eingerichtet ist, zum Starten und Landen des Helikopters.

4. Hybridantriebssystem (4) nach einem der vorhergehenden Ansprüche, **dadurch gekennzeichnet, dass** zudem ein Füllstandsmesser (9) am Treibstofftank (8) und ein Ladezustandsmesser (15) an der Batterie (14) angeordnet sind, welche ihre Messdaten im Betrieb der EM-Steuerung (11) übermitteln können.

5. Hybridantriebssystem (4) nach Anspruch 4, **gekennzeichnet durch** eine Berechnungseinheit (16) zum Berechnen der noch verfügbaren Energien und im Bedarfsfall zum Berechnen einer von der ersten Direktive abweichenden zweiten Direktive, um die Batterie vor Über- und Unterladung zu schützen, Treibstoff zu sparen und/oder zeitweise den VM (6) mit niedrigerer Leistung zu betreiben, um Emissionen zu reduzieren.

6. Verfahren zum Betreiben eines Hybridantriebssystems (4) für eine Antriebswelle (3) eines Helikopters, zur Gewährleistung einer vom Piloten geforderten Fluglage, unter Verwendung eines Hybridantriebssystems (4) mit Steuerungen (5, 7, 11) nach einem der vorhergehenden Ansprüche, **gekennzeichnet durch** die Schritte
- dass aktuelle Drehzahl- und Drehmomentwerte (DZ, DM) an der Antriebswelle (3) kontinuierlich gemessen und sowohl der EM-Steuerung (11) als auch der VM-Steuerung (7) übertragen werden,
- dass vorgegebene Werte für Drehzahl (DZo) und Drehmoment (DMo) abgespeichert sind, wobei beide Werte (DZo, DMo) von der EM-Steuerung (11) und mindestens die Drehzahl (DZo) von der VM-Steuerung (7) abrufbar sind, wobei diese Steuerungen (7, 11) stets Abweichungen der gemessenen Werte (DZ, DM) von den vorgegebenen Werten (DZo, DMo) ermitteln,
- dass, sobald ein Pilot mittels der Pilotensteuerung (5) eine veränderbare Leistungsanforderung an der Antriebswelle (3) erzeugt, um eine gewünschte Fluglage zu erreichen, auch eine Änderung der Drehzahl (DZ) an der Antriebswelle (3) verursacht wird,
- dass die VM-Steuerung (7) auf Grund einer Abweichung der aktuellen Drehzahl (DZ) von der vorgegebenen Drehzahl (DZo) die Leistung am VM (6) auf träge Weise derart ändert, dass die vorgegebene Drehzahl (DZo) erreicht wird,
- dass die EM-Steuerung (11) gemäss ihrer ersten Direktive auf Grund einer Abweichung der aktuellen Werte für Drehzahl (DZ) und/oder Drehmoment (DM) von den entsprechenden vorgegebenen Werten (DZo, DMo) die Leistung am EM (10) auf schnellere Weise als der VM (6) derart ändert, dass der VM (6), wenn er seine Leistung verzögert auf die vorgegebene Drehzahl (DZo) geregelt hat, das vorgegebene Drehmoment (DMo) aufbringt, in dem er den optimalen Wirkungsgrad erreicht,
- wodurch entweder die Batterie (14) durch die mechanische Leistung am EM (10) geladen oder der EM (10) mittels der Ladung in der Batterie (14) betrieben wird,
- und dass beim Aussetzen der EM-Steuerung (11) die VM-Steuerung (7) auf Grund der Drehzahlregelung auf den vorgegebenen Wert (DZo) automatisch die erforderliche Antriebskraft mittels VM (7) bereitstellt und dadurch eine stabile Fluglage gewährleistet.

7. Verfahren nach Anspruch 6 unter Verwendung eines Hybridantriebssystems (4) nach Anspruch 5, **dadurch gekennzeichnet, dass** die EM-Steuerung (11) auf Grund der Messdaten eines Füllstandsmessers (9) des Treibstofftanks (8) und/oder eines Ladezustandsmessers (15) der Batterie (14) die noch verfügbare Energie ermittelt und infolgedessen gemäss einer zweiten Direktive von der Regelung der ersten Direktive abweicht, um gezielt die Batterie (14) zu laden oder zu entladen, um die Batterie zu schützen, um Treibstoff zu sparen oder um zeitweise den VM (6) mit niedrigerer Leistung zu betreiben, um Emissionen zu reduzieren.

8. Verfahren nach einem der Ansprüche 6 oder 7, **dadurch gekennzeichnet, dass** in der Start- und/oder Landephase ausschliesslich der EM (10) betrieben wird, zur Reduktion von Lärm- und Abgasemissionen im Landegebiet.

9. Verfahren nach einem der Ansprüche 6 bis 8, **dadurch gekennzeichnet, dass** die EM-Steuerung (11) im Betrieb auf Grund einer zu geringen Drehzahl (DZ < DZo) und/oder eines überhöhten Drehmoments (DM > DMo) die Leistung am EM (10) steigert, und umgekehrt.

## Claims

1. Hybrid propulsion system (4) with controllers (5, 7, 11) and a drive shaft (3) of a helicopter with a main rotor (1) which is connected to a gear box and is configured to keep a stable flight attitude set by a pilot, comprising:
a pilot controller (5),
a combustion engine (VM) (6) and an electric motor (EM) (10), both of which act directly on the drive shaft (3),
wherein the VM (6) is connected to a VM controller (7) which is configured to adjust a fuel supply from a fuel tank (8) to the VM (6) in order to provide a desired propulsive power at the drive shaft (3);
and wherein the EM (10) is connected to an EM controller (11), which is configured to operate the EM (10) by discharging a battery (14) or charge the battery (14) by applying mechanical power on the EM (10), whereby the drive shaft (3) would either be accelerated or decelerated respectively,
wherein one or more torque sensors (17) and tachometers (18) are each arranged on the drive shaft (3), and both the VM controller (7) and the EM controller (11) are configured to each receive values of the current speed (DZ) and the current torque (DM) during operation,
and wherein predetermined values of the speed (DZO) and the torque (DM0), in which the VM (6) is configured to attain its optimum efficiency, are stored and can be called up for the EM controller (11), wherein the former (DZO) can also be called up for the VM controller (7),
and in that the VM controller (7), by adapting the output of the VM (6), is autonomously capable at any time of achieving the predetermined speed (DZO) at the drive shaft (3) and keeping it constant in order to maintain stable any flight attitude set by the pilot controller (5),
wherein the EM controller (11) is configured to additionally accelerate or decelerate the drive shaft (3) by engaging the EM (10), whereby the VM controller (7) is configured to automatically adapt the output at the VM (6) on the basis of the current rotational speed (DZ) in order to achieve or maintain the predetermined rotational speed (DZO) at the drive shaft (3),
**characterized in that**
a first directive is stored in the EM controller (11) to continuously exert such an accelerating or decelerating force from the EM (10) on the drive shaft (3), thereby causing the VM (6), when it has reached or is maintaining an optimum speed (DZO) at the drive shaft (3), to automatically generate the torque (DM0) on the drive shaft (3) at which it reaches an optimum engine output.

2. Hybrid propulsion system (4) according to claim 1, **characterized in that** the EM (10) is arranged between the VM (6) and the gear box of the main rotor (1).

3. Hybrid propulsion system (4) according to claim 1 or 2, **characterized in that** a direct data signal line (19) is set up between the pilot controller (5) and the VM controller (7), for take-off and landing of the helicopter.

4. Hybrid propulsion system (4) according to one of the preceding claims, **characterized in that,** in addition, a level meter (9) is arranged on the fuel tank (8) and a charge state indicator (15) is arranged on the battery (14), which are configured to transmit their measurement data to the EM controller (11) during operation.

5. Hybrid propulsion system (4) according to claim 4, **characterized in that** a calculation unit (16) for calculating energies that are still available and, if necessary, for calculating a second directive which differs from the first directive in order to protect the battery from overcharging and undercharging, economising on fuel and/or temporarily operating the VM (6) at lower power in order to reduce emissions.

6. A method for operating a hybrid propulsion system (4) for a drive shaft (3) of a helicopter, for guaranteeing a flight attitude set by the pilot, using a hybrid propulsion system (4) with controllers (5, 7, 11) according to one of the preceding claims, **characterized by the steps**
that current speed and torque values (DZ, DM) at the drive shaft (3) are continuously measured and transmitted to both the EM controller (11) and the VM controller (7),
in that predetermined values for speed (DZO) and torque (DM0) are stored, both values (DZO, DM0) being retrievable by the EM controller (11) and at least the speed (DZO) being retrievable by the VM controller (7), wherein said controllers (7, 11) continuously calculate deviations of the measured values (DZ, DM) from the predetermined values (DZO, DM0),
in that, as soon as a pilot generates a changeable request for power at the drive shaft (3) via the pilot controller (5) to reach a desired flight attitude, a change in the speed (DZ) at the drive shaft (3) is also caused,
in that the VM controller (7), on the basis of a deviation of the current speed (DZ) from the predetermined speed (DZ0), changes the power at the VM (6) in a slow manner in such a way that the predetermined speed (DZO) is reached,
in that the EM controller (11) changes the power at the EM (10) in accordance with its first directive in response to a difference between current values for speed (DZ) and/or torque (DM) and the corresponding predetermined values (DZO, DM0) more quickly than the VM (6), in such manner that the VM (6), when it has adjusted its output to the predetermined speed (DZ) with a delay, exerts the predetermined torque in which it attains optimum efficiency,
whereby either the battery (14) is charged by the mechanical power at the EM (10) or the EM (10) is operated by the charge in the battery (14),
and that when the EM controller (11) is deactivated, the VM controller (7) automatically provides the required propulsive power via the VM (7) based on the adjustment of the speed to the predetermined value (DZ0), thereby ensuring a stable flight attitude.

7. Method according to claim 6 using a hybrid propulsion system (4) according to claim 5, **characterized in that** the EM controller (11) determines an amount of energy still available on the basis of a measurement data of a level meter (9) of the fuel tank (8) and/or a charge state indicator (15) of the battery (14) and, as a result, deviates from the control of the first directive in accordance with a second directive, to specifically charge or discharge the battery (14), to protect the battery, to save fuel or to temporarily operate the VM (6) at lower power in order to reduce emissions.

8. Method according to claim one of claims 6 or 7, **characterized in that** in the take-off and/or landing phases only the EM (10) is operated in order to reduce noise and exhaust emissions in a landing area.

9. Method according to one of claims 6 to 8, **characterized in that** the EM controller (11) increases the power at the EM (10) during operation due to too low a rotational speed (DZ < DZ0) and/or excessive torque (DM > DM0), and vice versa.

## Revendications

1. Système de propulsion hybride (4)
avec des commandes (5, 7, 11) et un arbre d'entraînement (3) d'un hélicoptère avec un rotor principal (1) relié à une transmission, qui est configuré pour pouvoir maintenir une attitude de vol prédéfinie par un pilote de manière stable, comprenant
- une commande de pilote (5),
- un moteur à combustion (VM) (6) et un moteur électrique (EM) (10), tous deux en prise directe avec l'arbre d'entraînement (3),
- le VM (6) étant relié à une commande VM (7) qui est configurée pour pouvoir réguler l'alimentation en carburant du VM (6) à partir d'un réservoir de carburant (8) afin de fournir une force motrice souhaitée à l'arbre d'entraînement (3);
- et dans lequel l'EM (10) est relié à une commande EM (11) qui est configurée pour pouvoir faire fonctionner l'EM (10) par décharge d'une batterie (14) ou charger la batterie (14) par une puissance mécanique appliquée à l'EM (10), ce qui entraînerait ou freinerait respectivement l'arbre d'entraînement (3),
- un ou plusieurs capteurs de couple (17) et tachymètres (18) étant disposés sur l'arbre d'entraînement (3) et la commande VM (7) ainsi que la commande EM (11) pouvant recevoir, en fonctionnement, des valeurs de la vitesse de rotation actuelle (DZ) et du couple actuel (DM),
- et dans lequel des valeurs prédéfinies de la vitesse de rotation (DZo) et du couple (DMo), dans lesquelles le VM (6) est configuré pour pouvoir atteindre son rendement optimal, sont enregistrées et sont consultables pour la commande EM (11), la première (DZo) pouvant également être consultée pour la commande VM (7),
- et en ce que la commande VM (7), en adaptant la puissance du VM (6), est à tout moment en mesure, de manière autonome, d'atteindre la vitesse de rotation prédéfinie (DZo) sur l'arbre d'entraînement (3) et de la maintenir constante, afin de maintenir stable toute attitude de vol prédéfinie par la commande du pilote (5),
- dans lequel la commande EM (11), par l'utilisation de l'EM (10), est en outre en mesure d'entraîner ou freiner l'arbre d'entraînement (3), ce qui permet à la commande VM (7), sur la base de la vitesse de rotation actuelle (DZ), d'adapter automatiquement la puissance sur le VM (6), afin d'atteindre ou de maintenir la vitesse de rotation prédéfinie (DZo) sur l'arbre d'entraînement (3),
**caractérisé en ce qu'**une une première directive est mémorisée dans la commande EM (11) pour toujours exercer une telle force d'entraînement ou de freinage de l'EM (10) sur l'arbre d'entraînement (3), qui a pour conséquence que le VM (6), lorsqu'il a atteint ou maintient la vitesse de rotation optimale (DZo) sur l'arbre d'entraînement (3), produit automatiquement le couple (DMo) sur l'arbre d'entraînement (3), auquel il atteint la puissance optimale du moteur.

2. Système de propulsion hybride (4) selon la revendication 1, **caractérisé en ce que** l'EM (10) est disposé entre le VM (6) et la transmission du rotor principal (1).

3. Système de propulsion hybride (4) selon la revendication 1 ou 2, **caractérisé en ce qu'**une ligne de signalisation directe de données (19) est établie entre la commande de pilote (5) et la commande VM (7), pour le décollage et l'atterrissage de l'hélicoptère.

4. Système de propulsion hybride (4) selon l'une des revendications précédentes, **caractérisé en ce qu'**il comporte en outre un indicateur de niveau (9) sur le réservoir de carburant (8) et un indicateur d'état de charge (15) sur la batterie (14), qui sont configurés pour pouvoir transmettre leurs données de mesure à la commande EM (11) en fonctionnement.

5. Système de propulsion hybride (4) selon la revendication 4, **caractérisé en ce qu'**il comprend une unité de calcul (16) pour calculer les énergies encore disponibles et, en cas de besoin, pour calculer une deuxième directive s'écartant de la première directive, afin de protéger la batterie contre une surcharge et une sous-charge, d'économiser du carburant et/ou de faire fonctionner temporairement le VM (6) avec une puissance plus faible afin de réduire les émissions.

6. Procédé d'exploitation d'un système d'entraînement hybride (4) pour un arbre d'entraînement (3) d'un hélicoptère, pour garantir une attitude de vol exigée par le pilote, en utilisant un système d'entraînement hybride (4) avec des commandes (5, 7, 11) selon l'une des revendications précédentes, **caractérisé en ce qu'**il comprend les étapes suivantes
- des valeurs actuelles de vitesse de rotation et de couple (DZ, DM) sont mesurées en continu sur l'arbre d'entraînement (3) et transmises aussi bien à la commande EM (11) qu'à la commande VM (7),
- **en ce que** des valeurs prédéfinies pour la vitesse de rotation (DZo) et le couple (DMo) sont mémorisées, les deux valeurs (DZo, DMo) pouvant être appelées par la commande EM (11) et au moins la vitesse de rotation (DZo) par la commande VM (7), ces commandes (7, 11) déterminant toujours des écarts des valeurs mesurées (DZ, DM) par rapport aux valeurs prédéfinies (DZo, DMo),
- **en ce que**, dès qu'un pilote génère, au moyen de la commande de pilote (5), une demande de puissance modifiable sur l'arbre d'entraînement (3), afin d'atteindre une attitude de vol souhaitée, une modification de la vitesse de rotation (DZ) est également provoquée sur l'arbre d'entraînement (3),
- **en ce que** la commande VM (7), en raison d'un écart entre la vitesse de rotation actuelle (DZ) et la vitesse de rotation prédéfinie (DZo), modifie la puissance sur le VM (6) de manière inertielle de telle sorte que la vitesse de rotation prédéfinie (DZo) soit atteinte,
- **en ce que** la commande EM (11), conformément à sa première directive, sur la base d'un écart des valeurs actuelles de vitesse de rotation (DZ) et/ou de couple (DM) par rapport aux valeurs prédéterminées correspondantes (DZo, DMo), modifie la puissance au niveau de l'EM (10) de manière plus rapide que le VM (6) de telle sorte que le VM (6), lorsqu'il a régulé sa puissance avec un retard à la vitesse de rotation prédéterminée (DZo), applique le couple prédéterminé (DMo) dans lequel il atteint le rendement optimal,
- ce qui permet soit de charger la batterie (14) par la puissance mécanique sur l'EM (10), soit de faire fonctionner l'EM (10) au moyen de la charge dans la batterie (14),
- et **en ce que**, lors de l'arrêt de la commande EM (11), la commande VM (7) fournit automatiquement la force motrice nécessaire au moyen de la VM (7) en raison de la régulation de la vitesse de rotation à la valeur prédéfinie (DZo) et garantit ainsi une attitude de vol stable.

7. Procédé selon la revendication 6, utilisant un système de propulsion hybride (4) selon la revendication 5, **caractérisé en ce que** la commande EM (11) détermine l'énergie encore disponible sur la base des données de mesure d'un indicateur de niveau (9) du réservoir de carburant (8) et/ou d'un indicateur d'état de charge (15) de la batterie (14) et s'écarte par conséquent de la régulation de la première directive conformément à une deuxième directive, pour charger ou décharger de manière ciblée la batterie (14), pour protéger la batterie, pour économiser du carburant ou pour faire fonctionner temporairement le VM (6) à une puissance plus faible afin de réduire les émissions..

8. Procédé selon l'une des revendications 6 ou 7, **caractérisé en ce que,** lors de la phase de décollage et/ou d'atterrissage, seul l'EM (10) fonctionne, pour réduire les émissions de bruit et de gaz d'échappement dans la zone d'atterrissage.

9. Procédé selon l'une des revendications 6 à 8, **caractérisé en ce que** les commandes EM (11) augmentent la puissance sur l'EM (10) en fonctionnement en raison d'une vitesse de rotation trop faible (DZ < DZo) et/ou d'un couple excessif (DM > DMo), et inversement.
